# EUROPÄISCHE PATENTSCHRIFT

(11) **EP 2 960 190 B1**
(45) Veröffentlichungstag und Bekanntmachung des Hinweises auf die Patenterteilung: **03.01.2018**
(21) Anmeldenummer: 14173526.6
(22) Anmeldetag: 23.06.2014
(51) Int. Cl.: B65G 47/82

(54) **PACKMULDENSYSTEM FÜR EIN WARENCHECKOUT-SYSTEM**
PACKING BAYS SYSTEM FOR A GOODS CHECKOUT SYSTEM
SYSTEME DE ZONES D'ENSACHAGE POUR UN SYSTEME DE CAISSES DE SUPERMARCHE

(43) Veröffentlichungstag der Anmeldung: 30.12.2015
(73) Patentinhaber: Wincor Nixdorf International GmbH, 33106 Paderborn (DE)
(72) Erfinder: Schäfer, Oliver, 10369 Berlin (DE); Döll, Andreas, 13158 Berlin (DE); Döll, Hans-Jürgen, 99086 Erfurt (DE)

(56) Entgegenhaltungen:
- US-A1- 2012 181 145
- US-B1- 6 220 422
- US-B1- 6 910 568

## Beschreibung

Die Erfindung betrifft ein Packmuldensystem für ein Warencheckout-System nach dem Oberbegriff des Anspruchs 1.

Ein derartiges Packmuldensystem umfasst mehrere Packmulden zum Aufnehmen von Waren und eine Fördereinrichtung, die zumindest einen Förderbandabschnitt zum Befördern von Waren in eine Förderrichtung hin zu den Packmulden aufweist. An der Fördereinrichtung ist eine verstellbare Warenweiche angeordnet, die eine längs entlang einer Längserstreckungsrichtung erstreckte Ableitwandung aufweist. Die Warenweiche erstreckt sich in einer ersten Stellung mit der Ableitwandung unter einem Winkel zu der Förderrichtung über den zumindest einen Förderabschnitt hinweg, um Waren, die beim Fördern in die Förderrichtung in Anlage mit der Ableitwandung gelangen, in eine parallel zur Längserstreckungsrichtung gerichtete Ableitrichtung von dem zumindest einen Förderabschnitt hin zu einer ersten Packmulde zu leiten. Aus der ersten Stellung heraus kann die Warenweiche in eine zweite Stellung verstellt werden, um Waren hin zu zumindest einer anderen, zweiten Packmulde zu befördern.

Solch ein Packmuldensystem kann beispielsweise in einer Supermarktumgebung oder in einem sonstigen Warenhaus, beispielsweise in einem Möbelhaus oder anderen Ladengeschäften, zum Einsatz kommen. Solch ein Packmuldensystem kann dabei an einer herkömmlichen Kasseneinrichtung verwendet werden, bei der ein Kassierer Waren über einen geeigneten Scanner einscannt und sodann auf eine Fördereinrichtung zum Befördern in Packmulden legt. Ein solches Packmuldensystem kann aber auch bei Warencheckout-Systemen zum Einsatz kommen, die einen selbsttätig durch einen Kunden durchgeführten Warencheckout ermöglichen und Waren automatisch - ohne Interaktion durch einen Kassierer - erfassen können.

Bei einem solchen Packmuldensystem werden Waren über einen Förderbandabschnitt hin zu einer Packmulde geleitet, wobei die Warenweiche sich über den Förderbandabschnitt hinweg erstreckt, um Waren von dem Förderbandabschnitt hin zu einer zugeordneten Packmulde abzuleiten. Werden auf dem Förderbandabschnitt Waren in Form von zylindrischen Flaschen, Dosen oder dergleichen befördert, die auf dem Förderbandabschnitt rollen können, so kann es dazu kommen, dass die Waren an die Warenweiche anschlagen und aufgrund der Förderbewegung des Förderbandabschnitts an der Warenweiche in eine Rollbewegung versetzt werden. Aufgrund des Anliegens an der Warenweiche und des dadurch auftretenden Reibkontakts zwischen den rollenden Waren kann hierbei bewirkt werden, dass die Waren sich entgegen der Ableitrichtung an der Warenweiche bewegen und somit nicht - wie eigentlich gewünscht - in Ableitrichtung von dem Förderbandabschnitt abgeleitet werden, sondern auf dem Förderbandabschnitt verbleiben. Wird nunmehr die Warenweiche verstellt, kann es vorkommen, dass Waren auf dem Förderbandabschnitt verbleiben, die eigentlich in eine Packmulde hätten abgeleitet werden sollen. Dies kann dazu führen, dass ein Kunde Waren bezahlt, aber nicht bekommt, weil sie nicht in eine ihm zugeordnete Packmulde gelangen.

Ein solches Packmuldensystem ist aus US6910568B1 bekannt. Aufgabe der vorliegenden Erfindung ist es, ein zuverlässiges Ableiten von Waren über eine Warenweiche zu gewährleisten.

Diese Aufgabe wird durch einen Gegenstand mit den Merkmalen des Anspruchs 1 gelöst.

Demnach weist die Warenweiche an der Ableitwandung zumindest eine Unstetigkeit zum Verhindern einer Bewegung von Waren an der Ableitwandung entgegen der Ableitrichtung auf.

Die Unstetigkeit kann beispielsweise als in die Ableitwandung eingeformte Vertiefung ausgebildet sein. Denkbar und möglich ist jedoch auch, dass die Unstetigkeit als an der Ableitwandung angeordneter Vorsprung, nach Art eines quer zur Ableitrichtung vertikal an der Ableitwandung erstreckter Stegs, ausgebildet ist.

Vorteilhafterweise bildet die Unstetigkeit hierbei zumindest eine quer zur Längserstreckungsrichtung erstreckte Querflanke aus, mit der Waren bei einer Bewegung an der Ableitwandung entgegen der Ableitrichtung in Anlage gelangen.

Die vorliegende Erfindung geht von der Erkenntnis aus, dass eine Bewegung von Waren entgegen der Ableitrichtung an der Ableitwandung der Warenweiche vorteilhafterweise verhindert werden sollte. Um eine Bewegung von Waren entgegen der Ableitrichtung an der Ableitwandung der Warenweiche zu verhindern, ist daher an der Ableitwandung zumindest eine Unstetigkeit ausgebildet, beispielsweise in Form eines vorspringenden Stegs oder einer in die Ableitwandung eingeformten Vertiefung, mit der eine Ware bei einer Bewegung an der Ableitwandung entgegen der Ableitrichtung in Anlage gelangt, so dass die Ware nicht (weiter) an der Ableitwandung bewegt werden kann.

Eine solche Unstetigkeit ist insbesondere zum Verhindern einer Gegenbewegung von zylindrischen, rollbaren Waren vorteilhaft. Bei solchen zylindrischen, rollbaren Waren kann es aufgrund des Reibkontakts mit der Ableitwandung dazu kommen, dass die Waren in eine Rollbewegung versetzt und bei schräg zur Förderrichtung erstreckter Ableitwandung entgegen der Ableitrichtung an der Ableitwandung bewegt werden. Gelangt eine solche Ware jedoch in Wechselwirkung mit der Unstetigkeit, so wird eine (weitere) Bewegung der Ware entgegen der Ableitrichtung verhindert, so dass die Ware nicht aus dem Bereich der Warenweiche gelangen kann und somit bei einem Verstellen der Warenweiche aus ihrer ersten Stellung heraus zuverlässig in die (erste) Packmulde befördert wird, in die in der ersten Stellung der Warenweiche Waren abgeleitet werden sollen.

Grundsätzliche Funktion der Warenweiche ist, Waren in die Ableitrichtung von dem Förderbandabschnitt hin zu einer zugeordneten Packmulde abzuleiten. Ein solches Ableiten erfolgt in der Regel zuverlässig bei nicht rollbaren Waren, die bei Anschlagen an die Warenweiche in die Ableitrichtung entlang der Ableitwandung der Warenweiche gleiten und so hin zu der Packmulde geführt werden. Ein solches Ableiten in die Ableitrichtung soll nicht verhindert werden. Entsprechend ist die Unstetigkeit so beschaffen, dass eine Bewegung von Waren in die Ableitrichtung an der Ableitwandung nicht verhindert ist.

Vorteilshafterweise sind mehrere Unstetigkeiten an der Ableitwandung ausgebildet. Diese mehreren Unstetigkeiten sind entlang der Längserstreckungsrichtung an der Ableitwandung zueinander versetzt angeordnet, so dass unterschiedliche Waren mit unterschiedlichen Unstetigkeiten in Wechselwirkung treten können.

Insbesondere wenn mehrere Unstetigkeiten an der Ableitwandung ausgebildet sind, weisen diese in einer vorteilhaften Ausgestaltung eine Sägezahnform auf. Die Sägezahnform besteht hierbei in einer Querschnittsebene quer zur Ableitrichtung und quer zu Förderrichtung und kann beschrieben werden durch eine im Wesentlichen senkrecht zur Ableitrichtung erstreckte Flanke und eine schräg zur Ableitrichtung erstreckte Flanke. Die senkrechte Flanke ist hierbei derart angeordnet, dass Waren bei Bewegung entgegen der Ableitrichtung an die senkrechte Planke anschlagen und somit nicht weiter an der Ableitwandung bewegt werden können.

Die Warenweiche ist vorzugsweise steg- oder stabförmig ausgebildet und erstreckt sich längs entlang der Längserstreckungsrichtung. Die Warenweiche ist hierbei beispielsweise an einem Ende gelenkig mit einer den zumindest einen Förderabschnitt seitlich begrenzenden Begrenzungswandung verbunden und kann entlang einer Schwenkrichtung zu der Begrenzungswandung verschwenkt werden. In der ersten Stellung erstreckt sich die Warenweiche unter einem Winkel zur Förderrichtung über den Förderabschnitt hinweg. Aus dieser ersten Stellung kann die Warenweiche heraus verschwenkt werden, um in einer zweiten Stellung Waren hin zu einer anderen Packmulde zu fördern.

Die Warenweiche erstreckt sich in der ersten Stellung unter einem Winkel zu der Förderrichtung. Hierunter ist zu verstehen, dass die Warenweiche sich unter einem Winkel ungleich 0° zu der Förderrichtung erstreckt und somit einen entlang der Förderrichtung gerichteten Förderweg an dem Förderabschnitt zumindest teilweise versperrt, so dass Waren von dem Förderabschnitt über die Warenweiche abgeleitet werden können.

Die Warenweiche ist in der ersten Stellung insbesondere schräg zur Förderrichtung erstreckt derart, dass die Ableitrichtung einen spitzen Winkel mit der Förderrichtung einschließt. Durch Anschlagen an die Warenweiche werden die Waren an der Warenweiche somit umgeleitet und hin zu einer an die Warenweiche anschließenden Packmulde gefördert.

In der zweiten Stellung hingegen kann die Warenweiche beispielsweise in etwa parallel zur Förderrichtung gerichtet sein, so dass Waren entlang des Förderbandabschnitts an der Warenweiche vorbei gefördert werden können. In dieser zweiten Stellung verschließt die Warenweiche beispielsweise eine Öffnung in einer Begrenzungswandung, hinter der die der ersten Stellung zugeordnete Packmulde angeordnet ist, so dass keine Waren in diese Packmulde gelangen können.

Grundsätzlich ist auch denkbar und möglich, dass die Warenweiche mehr als zwei Stellungen, beispielsweise drei oder vier Stellungen aufweist, um Waren stellungsabhängig in unterschiedliche Packmulden zu fördern. In diesem Fall sind mehr als zwei Packmulden, beispielsweise drei oder vier Packmulden vorgesehen, die abhängig von der Stellung der Warenweiche mit Waren gefüllt werden können.

In diesem Fall kann auch vorteilhaft sein, dass die Warenweiche an zwei Seiten jeweils eine Ableitwandung, an der eine oder mehrere Unstetigkeiten ausgebildet sind, aufweist, so dass die Warenweiche stellungsabhängig an ihrer ersten Seite oder ihrer zweiten Seite Waren ableiten kann.

In einer vorteilhaften Ausgestaltung weist das Packmuldensystem eine Antriebsvorrichtung auf, die zum elektromotorischen Verstellen der Warenweichen ausgebildet ist. Die Antriebsvorrichtung kann beispielsweise einen geeigneten Elektromotor aufweisen, der über ein Getriebe mit der Warenweiche gekoppelt ist und zum Verstellen der Warenweiche angetrieben werden kann.

Zum Steuern der Antriebsvorrichtung kann in diesem Fall eine Steuereinrichtung vorgesehen sein, die ausgebildet ist, die Antriebsvorrichtung zum Verstellen der Warenweiche in Abhängigkeit von einem an dem Packmuldensystem durchgeführten Warencheckout-Vorgang anzusteuern. Ein Verstellen der Warenweiche kann somit über die Steuereinrichtung und die Antriebsvorrichtung in automatischer Weise erfolgen, insbesondere ohne händische Aktion durch einen Kassierer. Zu diesem Zweck kann die Steuereinrichtung ausgebildet sein, einen Warencheckout-Vorgang zu überwachen und insbesondere das Ende eines Warencheckout-Vorgangs zu erkennen, so dass nach Beendigung eines Warencheckout-Vorgangs die Warenweiche verstellt und somit eine andere Packmulde zugänglich gemacht werden kann.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Packmuldensystems;
- Fig. 2A: eine perspektivische Ansicht eines Packmuldensystems, in einer ersten Stellung einer Warenweiche;
- Fig. 2B: eine Draufsicht der Anordnung gemäß Fig. 2A;
- Fig. 3A: eine perspektivische Ansicht des Packmuldensystems beim Verstellen der Warenweiche aus der ersten Stellung heraus;
- Fig. 3B: eine Draufsicht auf die Anordnung gemäß Fig. 3A;
- Fig. 4A: eine perspektivische Darstellung des Packmuldensystems, mit der Warenweiche in einer zweiten Stellung;
- Fig. 4B: eine Draufsicht auf die Anordnung gemäß 4A;
- Fig. 5A-5E: Ansichten eines Packmuldensystems nach dem Stand der Technik, in unterschiedlichen Stellungen einer Warenweiche; und
- Fig. 6: eine schematische Ansicht einer Warenweiche mit daran angeordneten, sägezahnförmigen Unstetigkeiten.

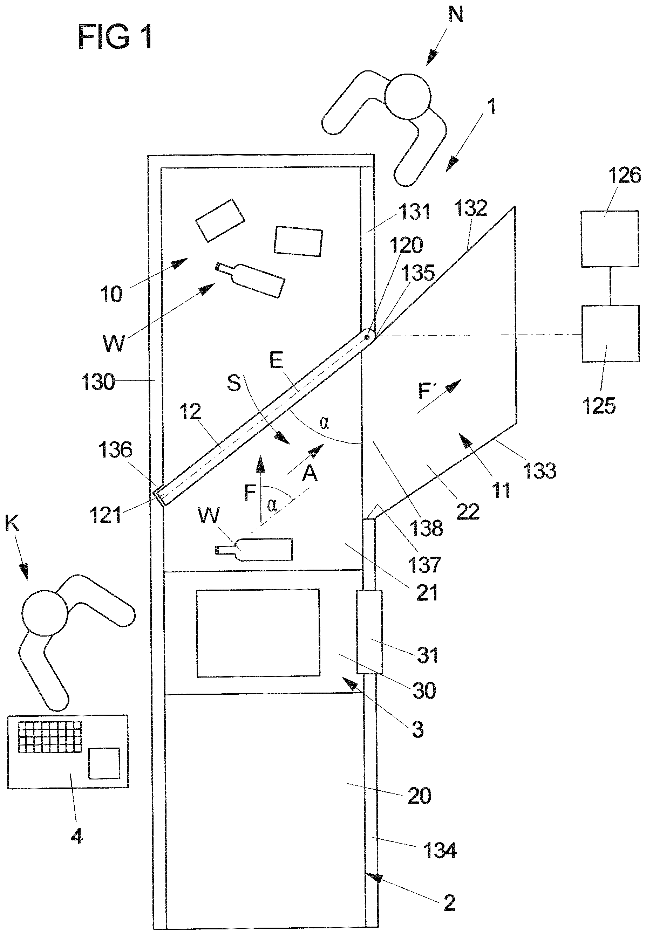

Fig. 1 zeigt in einer schematischen Darstellung ein Packmuldensystem 1, wie es an einem Warencheckout-System zum Einsatz kommen kann.

Das Packmuldensystem 1 umfasst eine Fördereinrichtung 2, die durch unterschiedliche Förderbandabschnitte 20, 21, 22 gebildet ist. Die Förderbandabschnitte 20, 21, 22 haben hierbei unterschiedliche Funktionen und Förderrichtungen.

Insbesondere ist ein erster Förderbandabschnitt 20 einer Warenerfassungseinrichtung 3, die eine Waage 30 und einen Scanner 31 zum Scannen von Waren W umfasst, entlang einer Förderrichtung F vorgelagert, so dass Waren W über diesen ersten Förderbandabschnitt 20 hin zu der Warenerfassungseinrichtung 3 geleitet werden können. An der Warenerfassungseinrichtung 3 können die Waren W sodann erfasst und registriert werden, damit ein Kassierer K über eine Kasseneinrichtung 4 einen Bezahlvorgang einleiten kann.

Nach Erfassung an der Warenerfassungseinrichtung 3 können die Waren W durch den Kassierer K auf einen zweiten Förderbandabschnitt 21 gelegt werden, um mittels dieses zweiten Förderbandabschnittes 21 in die Förderrichtung F hin zu einer von mehreren Packmulden 10, 11 geleitet zu werden. Die Packmulden 10, 11 dienen dazu, Waren W aufzunehmen, um einem Kunden N ein Entnehmen und Verpacken der Waren W zu ermöglichen.

In dem konkreten Ausführungsbeispiel weist das Packmuldensystem 1 zwei Packmulden 10, 11 auf, die durch eine Warenweiche 12 voneinander getrennt sind. Abhängig von der Stellung der Warenweiche 12 gelangen auf dem Förderbandabschnitt 21 beförderte Waren W entweder in die eine Packmulde 10 oder die andere Packmulde 11.

Bei dem dargestellten Ausführungsbeispiel ist die eine Packmulde 10 in Förderrichtung F hinter der Warenweiche 12 angeordnet, während die andere Packmulde 11 schräg von dem Förderbandabschnitt 21 abzweigt. Abhängig von der Stellung der Warenweiche 12 können somit Waren W von dem Förderbandabschnitt 21 in eine Ableitrichtung A in die schräg abzweigende Packmulde 11 abgeleitet werden, oder die Waren W werden entlang der Förderrichtung F weiter auf dem Förderbandabschnitt 21 befördert und gelangen somit in die Packmulde 10.

Bei dem dargestellten Ausführungsbeispiel ist der schräg abzweigenden Packmulde 11 ein weiterer Förderbandabschnitt 22 zugeordnet, der Waren W in eine schräge Förderrichtung F' in die Packmulde 11 hineinbefördert. Grundsätzlich kann auf einen solchen zusätzlichen Förderbandabschnitt 22 aber auch verzichtet werden; Waren W können durch Ableiten an der Warenweiche 12 auch passiv in die Packmulde 11 hineinrutschen.

Die Warenweiche 12 ist bei dem dargestellten Ausführungsbeispiel steg- oder stabförmig ausgebildet und erstreckt sich längs entlang einer Längserstreckungsrichtung E. Mit einem Ende 120 ist die Warenweiche 12 hierbei gelenkig an einer ersten seitlichen Begrenzungswandung 131 angeordnet, erstreckt sich - in der in Fig. 1 dargestellten Stellung - schräg über den Förderbandabschnitt 21 hinweg hin zu einer zweiten Begrenzungswandung 130 und ragt in eine Einbuchtung 136 an dieser zweiten Begrenzungswandung 130 hinein.

In der dargestellten Stellung beschreibt die Warenweiche 12 einen Winkel α mit der Förderrichtung F. Diese schräge Stellung der Warenweiche 12 führt dazu, dass Waren, die bei Beförderung in die Förderrichtung F auf dem Förderbandabschnitt 21 in Anlage mit der Warenweiche 12 gelangen, in eine parallel zur Längserstreckungsrichtung E gerichtete Ableitrichtung A hin in Richtung der schräg abzweigenden Packmulde 11 geleitet werden und somit in den Bereich dieser Packmulde 11 gelangen.

Die Warenweiche 12 ist entlang einer Schwenkrichtung S verschwenkbar und kann auf diese Weise aus der dargestellten, ersten Stellung heraus bewegt werden. In einer zweiten Stellung ist die Warenweiche 12 mit ihrer Längserstreckungsrichtung E parallel zur Förderrichtung F gerichtet und verschließt eine Öffnung 138 zwischen Begrenzungswandungen 131, 134, so dass Waren W ungehindert durch die Warenweiche 12 in die Förderrichtung F hin zur Packmulde 10 befördert werden können.

Die schräg abzweigende Packmulde 11 wird begrenzt durch schräg zu den Begrenzungswandungen 131, 134 erstreckte Begrenzungswandungen 132, 133. Die Warenweiche 12 ist im Bereich eines Knicks 135 zwischen der seitlichen Begrenzungswandung 131 der Packmulde 10 und der seitlichen Begrenzungswandung 132 der Packmulde 11 angelenkt. Die der Packmulde 11 zugeordnete Öffnung 138 ist gebildet zwischen dem Knick 135 und einer Kante 137 der Begrenzungswandung 134.

Während Waren W, die nicht zylindrisch ausgebildet sind und somit nicht ohne weiteres rollbar sind, durch Anschlagen an die Warenweiche 12 ohne Weiteres und in zuverlässiger Weise in die Ableitrichtung A von dem Förderbandabschnitt 21 in Richtung der abgezweigten Packmulde 11 abgeleitet werden können, kann bei zylindrischen, rollbaren Waren, beispielsweise Flaschen oder Dosen, es dazu kommen, dass solche Waren in eine Rollbewegung versetzt werden und sich dadurch entgegen der Ableitrichtung A an der Warenweiche 12 bewegen.

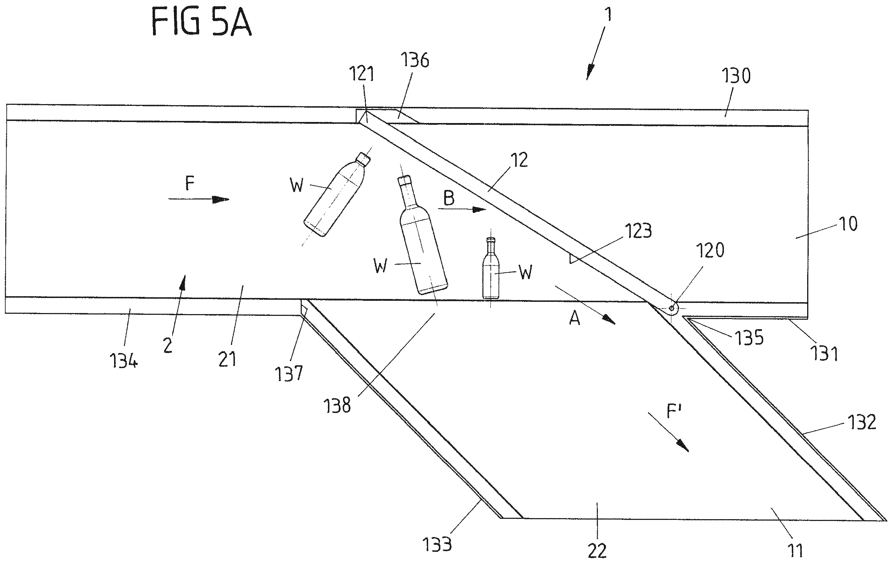

Dies ist anhand von Fig. 5A bis 5E veranschaulicht.

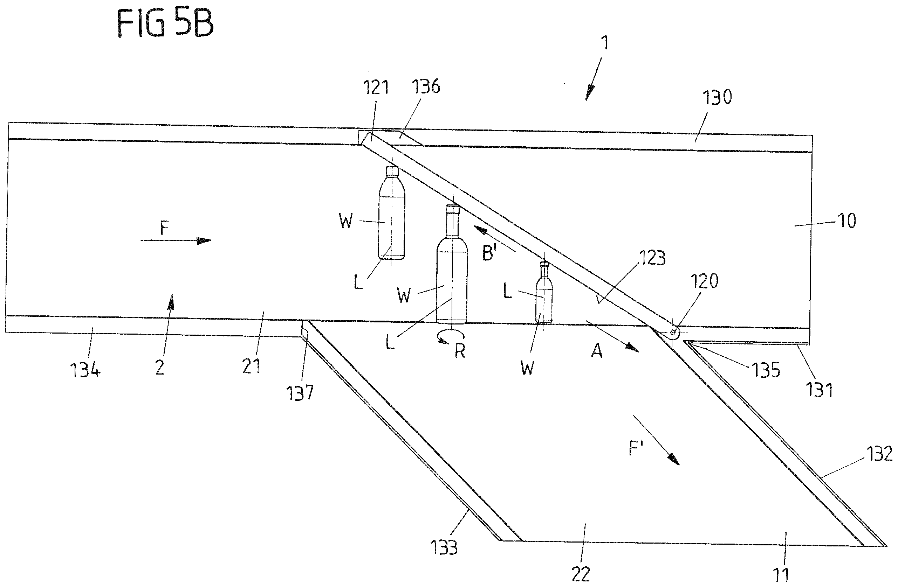

Fig. 5A zeigt das Packmuldensystem 1 in der ersten, schräg zur Förderrichtung F erstreckten Stellung der Warenweichen 12. Werden Waren in die Förderrichtung F auf dem Förderbandabschnitt 21 befördert, so bewegen sich die Waren W zusammen mit dem Förderbandabschnitt 21 in eine der Förderrichtung F entsprechende Bewegungsrichtung B und gelangen mit der schräg zur Förderrichtung F gerichteten Ableitwandung 123 der Warenweiche 12 in Anlage (Fig. 5B).

Durch Anlage an der Warenweiche 12 ist eine weitere Bewegung der Waren W in die Förderrichtung F gesperrt. Handelt es sich bei den Waren W um zylindrische, rollbare Gegenstände, beispielsweise Flaschen oder Dosen, so werden die Waren W in eine Rollbewegung R versetzt, bedingt dadurch, dass der Förderbandabschnitt 21 sich weiter in die Förderrichtung F bewegt und dadurch die Waren W um ihre jeweilige Längsachse L dreht.

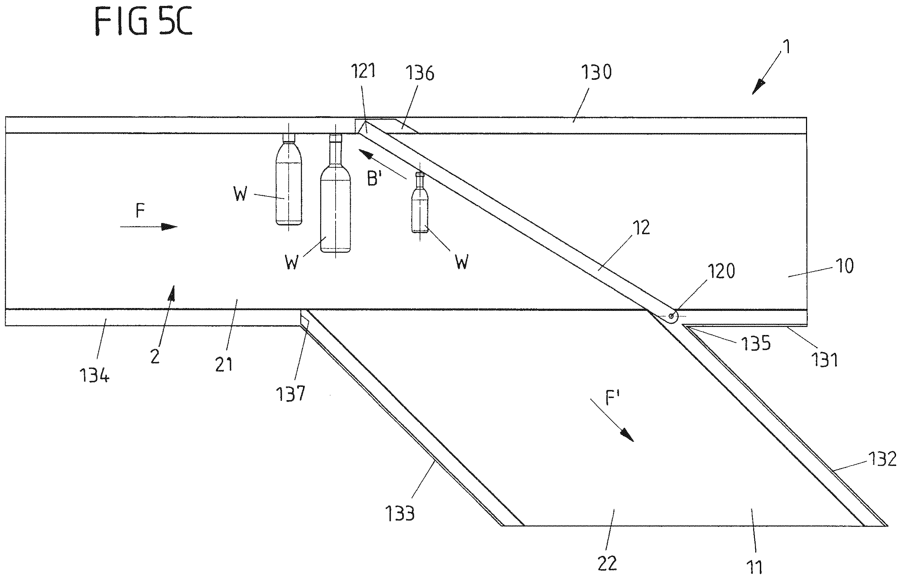

Dies bewirkt zunächst, dass die Waren W sich mit ihren Längsachsen L quer zur Förderrichtung F ausrichten, wie dies in Fig. 5B dargestellt ist. Aufgrund des Reibkontakts der Waren W mit der Ableitwandung 123 kommt es dabei gleichzeitig dazu, dass die Waren W sich rollend in eine Bewegungsrichtung B' entgegen der Ableitrichtung A an der Ableitwandung 123 der Warenweiche 12 entlang bewegen und somit entgegen der Ableitrichtung A an der Warenweiche 12 aufsteigen, wie dies in Fig. 5C dargestellt ist.

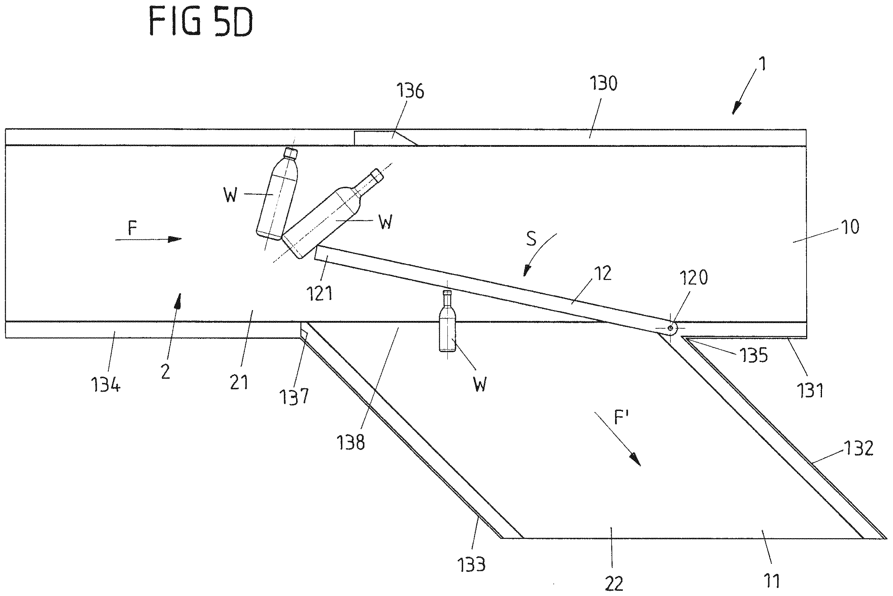

Dadurch wird bewirkt, dass sich die Waren W entgegen der Förderrichtung F bewegen und somit gegebenenfalls aus dem Bereich der Warenweiche 12 herausgelangen. Kommt es nunmehr zu einem Verstellen der Warenweiche 12 in die Schwenkrichtung S aus der ersten Stellung heraus, wie dies in Fig. 5D dargestellt ist, so wird die Warenweiche 12 gegebenenfalls an zumindest einem Teil der Waren W vorbeibewegt, so dass diese auf dem Förderbandabschnitt 21 verbleiben und nicht mit in die abzweigende Packmulde 11 befördert werden, in die die Waren W eigentlich hätten gelangen sollen. Wird dies nicht erkannt, so entnimmt ein Kunde N seine Waren W gegebenenfalls nicht vollständig, obwohl er die Waren W bezahlt hat.

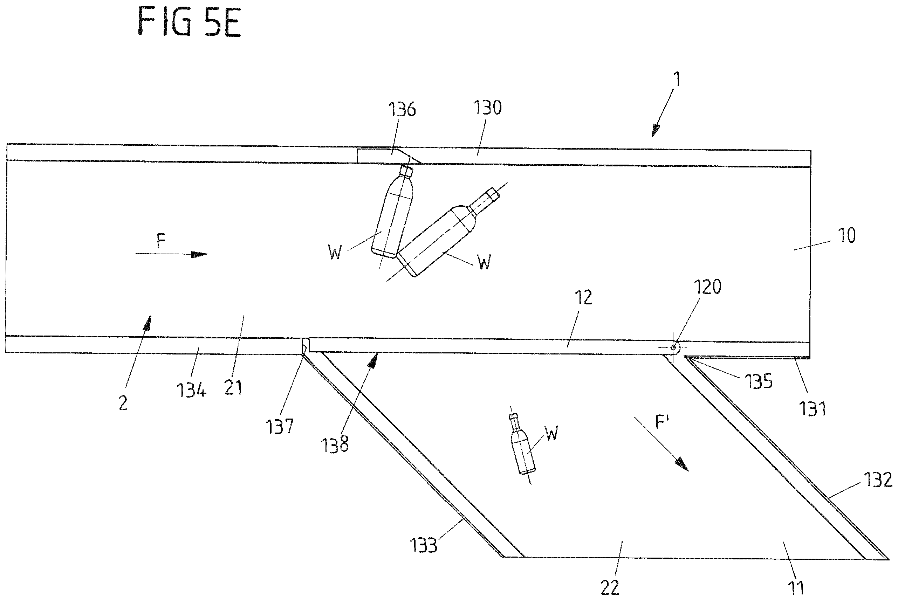

Ist die Warenweiche 12 vollständig in die zweite Stellung bewegt worden, wie dies in Fig. 5E dargestellt ist, so befinden sich die Waren W zumindest teilweise noch auf dem Förderbandabschnitt 21 und somit außerhalb der Packmulde 11. Die Waren W werden somit fälschlicherweise in die andere Packmulde 10 befördert.

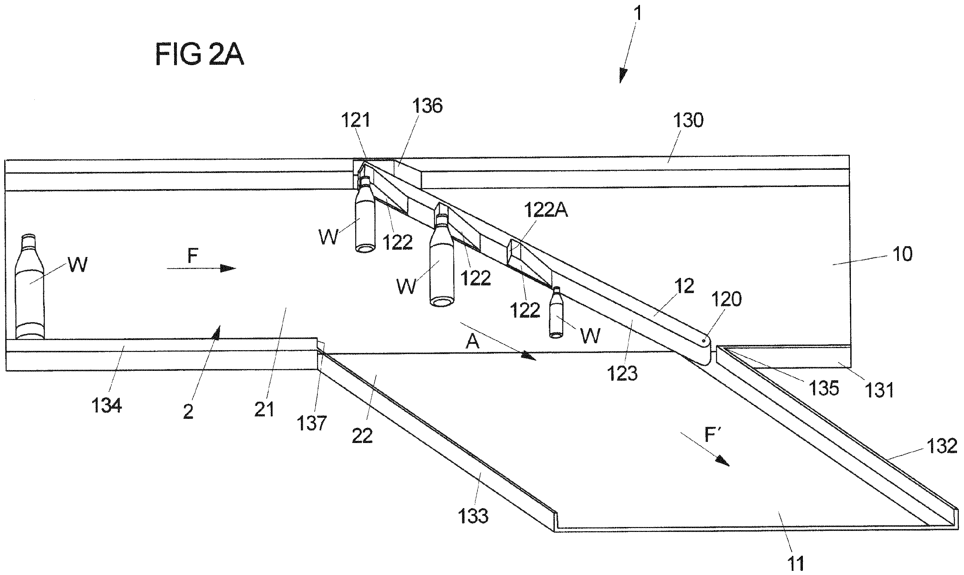

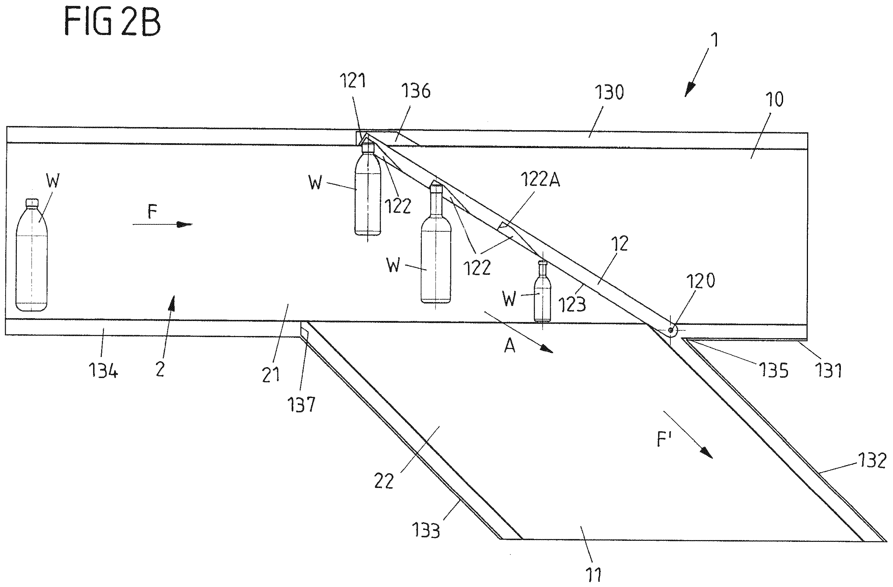

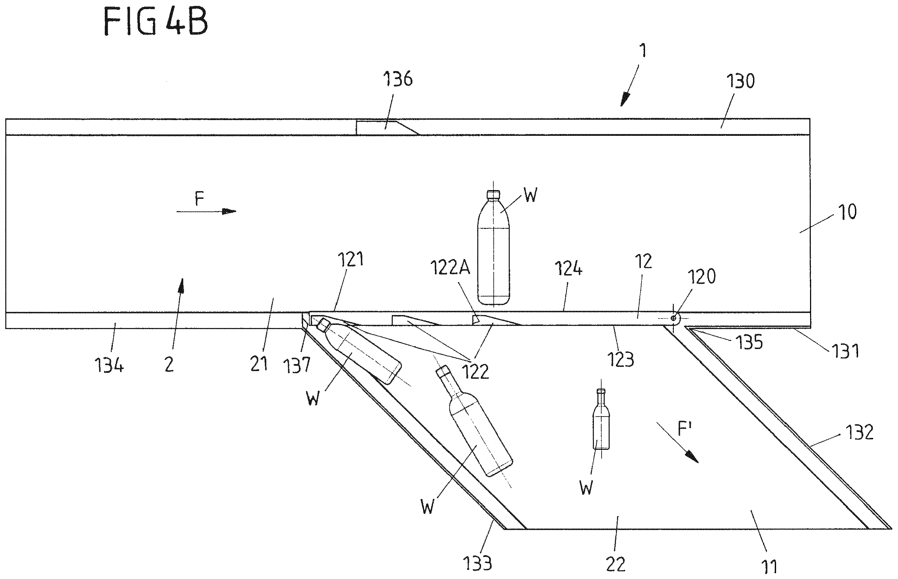

Um diesen nachteiligen Effekt zu verhindern, ist bei einem die Erfindung verwirklichenden Ausführungsbeispiel gemäß Fig. 2A, 2B bis 4A, 4B vorgesehen, an der Ableitwandung 123 der Warenweiche 12 Unstetigkeiten 122 in Form von in die Ableitwandung 123 eingeformten Vertiefungen vorzusehen. Diese Unstetigkeiten 122 haben die Wirkung, dass rollende Waren W die sich in eine Bewegungsrichtung B' (siehe Fig. 5B und 5C) entgegen der Ableitrichtung A an der Warenweiche 12 bewegen, in Eingriff mit den Unstetigkeiten 122 gelangen und somit nicht über die Unstetigkeiten 122 hinaus an der Warenweiche 12 bewegt werden können. Die Unstetigkeiten 122 verhindern eine Bewegung von Waren W entgegen der Ableitrichtung A an der Warenweiche 12 und verhindern somit, dass die Waren W aus dem Bereich der Warenweiche 12 heraus gelangen können.

Die Unstetigkeiten 122 bei dem Ausführungsbeispiel gemäß Fig. 2A, 2B bis 4A, 4B weisen jeweils eine Querflanke 122A auf, an die ein Warengegenstand W bei Bewegung gegen der Ableitrichtung A anschlägt, so dass eine Weiterbewegung des Warengegenstands W über die Flanke 122A hinaus nicht möglich ist.

Mehrere Unstetigkeiten 122 sind hierbei entlang der Ableitrichtung A versetzt an der Ableitwandung 123 ausgebildet, so dass mehrere Warengegenstände W in unterschiedlichen Unstetigkeiten 122 aufgenommen werden können.

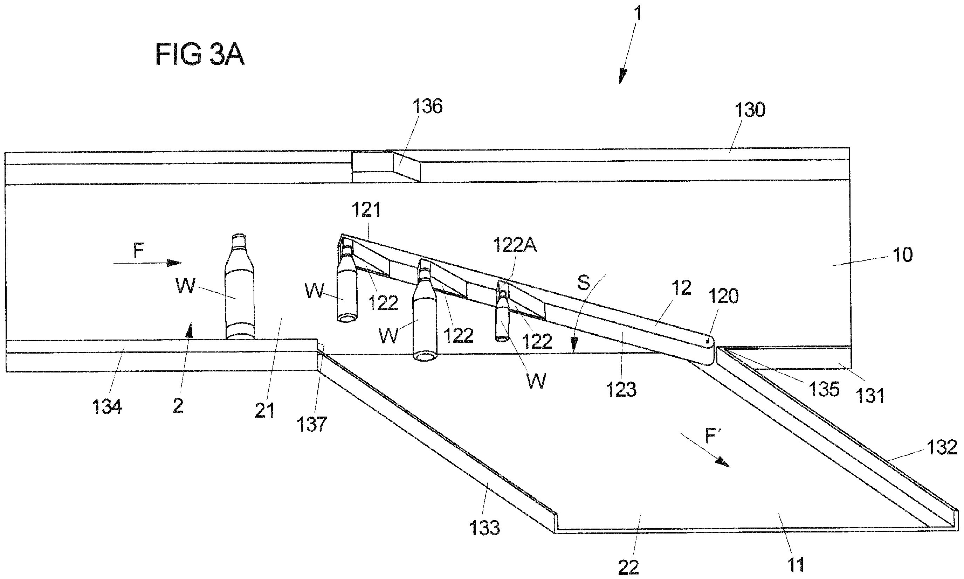

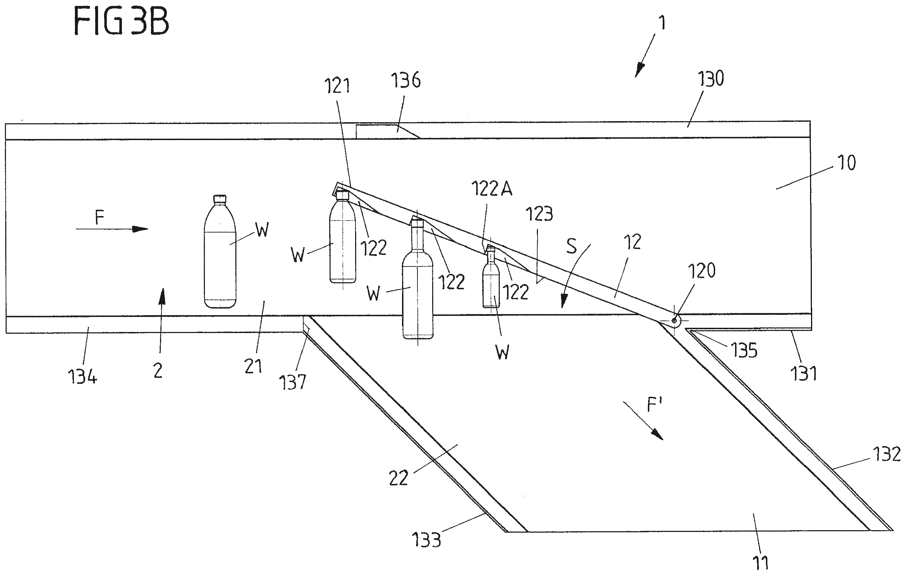

Wird bei diesem Packmuldensystem 1 die Warenweiche 12 aus der ersten Stellung heraus verstellt, wie dies in Fig. 3A, 3B dargestellt ist, so werden die Waren W über ihren Eingriff in die Unstetigkeit 122 mit der Warenweiche 12 mitbewegt und somit zuverlässig in den Bereich der zugeordneten Packmulde 11 hinein befördert. Es wird somit sichergestellt, dass keine Waren W, die in die Packmulde 11 hinein befördert werden sollen, auf dem Förderbandabschnitt 21 verbleiben.

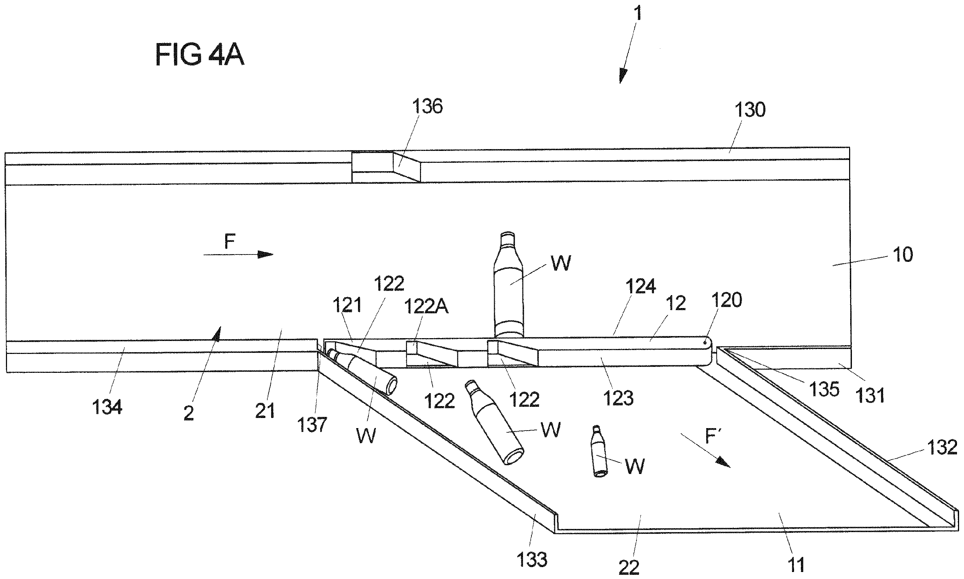

Ist die Warenweiche 12, wie in Fig. 4A und 4B dargestellt, in die zweite Stellung verstellt worden, so sind auch die an den Unstetigkeiten 122 erfassten Waren W in den Bereich der Packmulde 11 gelangt. Die Warenweiche 12 versperrt nunmehr die Öffnung 138 zwischen den Begrenzungswandungen 131, 134, so dass weitere Waren W an einer Außenseite 124 der Warenweiche 12 entlang auf dem Förderbandabschnitt 21 in Richtung der anderen Packmulde 10 befördert werden können.

Die Unstetigkeiten 122 sind so zu formen, dass eine Bewegung von Waren entgegen der Ableitrichtung A über die Unstetigkeiten hinaus zuverlässig verhindert ist. Eine Bewegung von Waren W in die Ableitrichtung A hingegen darf durch die Unstetigkeiten 122 nicht gesperrt sein.

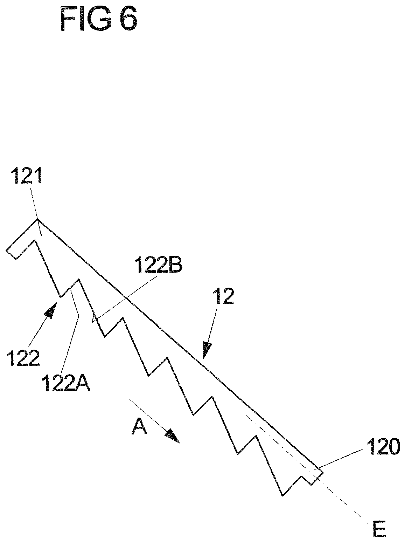

Hierzu weisen die Unstetigkeiten, wie dies schematisch in Fig. 6 dargestellt ist, eine Sägezahnform auf, wobei eine senkrechte Flanke 122A eine Bewegung entgegen der Ableitrichtung A sperrt, eine schräg zur Ableitrichtung A erstreckte Flanke 122B hingegen eine Bewegung in die Ableitrichtung A an der Ableitwandung 123 entlang zulässt.

Denkbar und möglich sind auch andere Ausgestaltungen von Unstetigkeiten 122. Beispielsweise können die Unstetigkeiten 122 nach Art von quer zur Ableitrichtung (A) vertikal an der Ableitwandung vorspringenden Stegen oder nach Art von in die Ableitwandung eingeformten Vertiefungen ausgestaltet sein.

Der der Erfindung zugrunde liegende Gedanke ist nicht auf die vorangehend geschilderten Ausführungsbeispiele beschränkt, sondern lässt sich grundsätzlich auch bei gänzlich anders gearteten Ausführungsformen verwirklichen.

Insbesondere kann ein Packmuldensystem grundsätzlich auch mehr als zwei Packmulden, beispielsweise drei, vier oder sogar noch mehr Packmulden, aufweisen.

Eine Warenweiche kann hierbei auch mehr als zwei Stellungen zum Leiten von Waren in Richtung von zwei oder mehr Packmulden aufweisen.

Zudem kann auch mehr als eine Warenweiche vorgesehen sein.

### Bezugszeichenliste

- 1: Packmuldensystem
- 10, 11: Packmulde
- 12: Warenweiche
- 120,121: Ende
- 122: Unstetigkeit
- 122A: Querflanke
- 122B: Flanke
- 123: Ableitwandung
- 124: Seite
- 125: Antriebsvorrichtung
- 126: Steuereinrichtung
- 130-134: Begrenzungswandung
- 135: Knick
- 136: Einbuchtung
- 137: Kante
- 138: Öffnung
- 2: Fördereinrichtung
- 20,21,22: Förderbandabschnitt
- 3: Warenerfassungseinrichtung
- 30: Waage
- 31: Scanner
- 4: Kasseneinrichtung
- α: Winkel
- A: Ableitrichtung
- B, B', B": Bewegungsrichtung
- E: Längserstreckungsrichtung
- F, F': Förderrichtung
- K: Kassierer
- L: Längsachse
- N: Kunde
- R: Rollbewegung
- S: Schwenkrichtung
- W: Ware

## Patentansprüche

1. Packmuldensystem (1) für ein Warencheckout-System, mit
- mehreren Packmulden (10, 11) zum Aufnehmen von Waren (W),
- einer Fördereinrichtung (2), die zumindest einen Förderbandabschnitt (21, 22) zum Befördern von Waren (W) in eine Förderrichtung (F) aufweist, und
- einer Warenweiche (12), die verstellbar an der Fördereinrichtung (2) angeordnet ist und eine längs entlang einer Längserstreckungsrichtung (E) erstreckte Ableitwandung (123) aufweist, wobei die Warenweiche (12) sich in einer ersten Stellung mit der Ableitwandung (123) unter einem Winkel (α) zu der Förderrichtung (F) über den zumindest einen Förderabschnitt (21, 22) hinweg erstreckt, um Waren (W), die beim Fördern in die Förderrichtung (F) in Anlage mit der Ableitwandung (123) gelangen, in eine parallel zur Längserstreckungsrichtung (E) gerichtete Ableitrichtung (A) von dem zumindest einen Förderabschnitt (21, 22) hin zu einer ersten Packmulde (11) zu leiten, und aus der ersten Stellung in eine zweite Stellung verstellbar ist, um Waren (W) hin zu zumindest einer anderen, zweiten Packmulde (10) zu befördern,
**dadurch gekennzeichnet,**
**dass** die Warenweiche (12) an derAbleitwandung (123) zumindest eine Unstetigkeit (122) zum Verhindern einer Bewegung von Waren (W) an der Ableitwandung (123) entgegen der Ableitrichtung (A) aufweist, wobei die zumindest eine Unstetigkeit (122) ausgebildet ist, eine Bewegung von Waren (W) in die Ableitrichtung (A) an der Ableitwandung (123) nicht zu verhindern, wobei
- die zumindest eine Unstetigkeit (122) die Form eines quer zur Ableitrichtung (A) vertikal an der Ableitwandung (123) erstreckten Stegs oder einer in die Ableitwandung (123) eingeformten Vertiefung, mit der eine Ware bei einer Bewegung an der Ableitwandung (123) entgegen der Ableitrichtung (A) in Anlage gelangt, so dass die Ware (W) nicht weiter entgegen der Ableitrichtung (A) an der Ableitwandung (123) bewegt werden kann, aufweist oder
- mehrere Unstetigkeiten (122) an der Ableitwandung (123) ausgebildet sind, die eine Sägezahnform mit einer im Wesentlichen senkrecht zur Ableitrichtung erstrecken Flanke (122A) und einer schräg zur Ableitrichtung (A) erstreckten Flanke (122B) aufweisen.

2. Packmuldensystem (1) nach Anspruch 1, **dadurch gekennzeichnet, dass** die Warenweiche (12) an einem Ende gelenkig mit einer den zumindest einen Förderabschnitt (21, 22) seitlich begrenzenden Begrenzungswandung (130-134) verbunden ist derart, dass die Warenweiche (12) entlang einer Schwenkrichtung (S) zu der Begrenzungswandung (130-134) verschwenkbar ist.

3. Packmuldensystem (1) nach Anspruch 1 oder 2, **dadurch gekennzeichnet, dass** die Warenweiche (12) in der ersten Stellung unter einem schrägen Winkel (a) zu der Förderrichtung (F) erstreckt ist.

4. Packmuldensystem (1) nach einem der vorangehenden Ansprüche, **dadurch gekennzeichnet, dass** die Warenweiche (12) in der zweiten Stellung parallel zur Förderrichtung (F) erstreckt ist.

5. Packmuldensystem (1) nach einem der vorangehenden Ansprüche, **gekennzeichnet durch** eine Antriebsvorrichtung (125) zum elektromotorischen Verstellen der Warenweiche (12).

6. Packmuldensystem (1) nach Anspruch 5, **gekennzeichnet durch** eine Steuereinrichtung (126) zum Steuern der Antriebsvorrichtung (125) zum Verstellen der Warenweiche (12) in Abhängigkeit von einem an dem Packmuldensystem (1) durchgeführten Warencheckout-Vorgang.

## Claims

1. Packing trough system (1) for a goods checkout system, comprising
- a plurality of packing troughs (10, 11) for receiving goods (W),
- a conveying device (2) which has at least one conveyor belt portion (21, 22) for conveying goods (W) in a conveying direction (F), and
- a goods switch (12) which is arranged adjustably on the conveying device (2) and has a diverting wall (123) which extends longitudinally along a longitudinal direction of extent (E), wherein the goods switch (12) extends over and beyond the at least one conveying portion (21, 22) in a first position with the diverting wall (123) at an angle (α) to the conveying direction (F) in order to guide goods (W), which come into contact with the diverting wall (123) during conveying in the conveying direction (F), from the at least one conveying portion (21, 22) towards a first packing trough (11) in a diverting direction (A) directed parallel to the longitudinal direction of extent (E), and is adjustable from the first position into a second position in order to convey goods (W) towards at least one other, second packing trough (10),
**characterized in that**
the goods switch (12) has, on the diverting wall (123), at least one discontinuity (122) for preventing a movement of goods (W) on the diverting wall (123) counter to the diverting direction (A), wherein the at least one discontinuity (122) is designed not to prevent a movement of goods (W) in the diverting direction (A) on the diverting wall (123), wherein
- the at least one discontinuity (122) has the form of a web which extends vertically on the diverting wall (123) transversely to the diverting direction (A) or of a depression which is formed into the diverting wall (123) and with which a goods item comes into contact during a movement on the diverting wall (123) counter to the diverting direction (A), with the result that the goods item (W) cannot be moved further counter to the diverting direction (A) on the diverting wall (123), or
- a plurality of discontinuities (122) are formed on the diverting wall (123), which discontinuities have a sawtooth shape with a flank (122A) extending substantially perpendicularly to the diverting direction and with a flank (122B) extending obliquely to the diverting direction (A).

2. Packing trough system (1) according to Claim 1, **characterized in that** the goods switch (12) is connected in an articulated manner at one end to a boundary wall (130-134) which laterally delimits the at least one conveying portion (21, 22), in such a way that the goods switch (12) can be pivoted along a pivoting direction (S) with respect to the boundary wall (130-134).

3. Packing trough system (1) according to Claim 1 or 2, **characterized in that** the goods switch (12) extends in the first position at an oblique angle (a) to the conveying direction (F).

4. Packing trough system (1) according to one of the preceding claims, **characterized in that** the goods switch (12) extends in the second position parallel to the conveying direction (F).

5. Packing trough system (1) according to one of the preceding claims, **characterized by** a drive device (125) for the electromotive adjustment of the goods switch (12).

6. Packing trough system (1) according to Claim 5, **characterized by** a control device (126) for controlling the drive device (125) for adjusting the goods switch (12) in dependence on a goods checkout operation carried out on the packing trough system (1).

## Revendications

1. Système (1) de zones d'ensachage pour système de caisses de supermarché, présentant
plusieurs zones d'ensachage (10, 11) qui reprennent des marchandises (W),
un dispositif de transport (2) qui présente au moins une section (21, 22) de bande transporteuse qui transporte des marchandises (W) dans une direction de transport (F) et
un aiguillage (12) à marchandises qui est disposé de manière ajustable sur le dispositif de transport (2) et qui présente une paroi (123) qui s'étend dans une direction longitudinale d'extension (E), l'aiguillage (12) à marchandises s'étendant dans une première position avec la paroi d'évacuation (123) sous un angle (α) par rapport à la direction de transport (F) en s'éloignant de la ou des sections de transport (21, 22) pour guider des marchandises (W) qui lors du transport dans la direction de transport (F) viennent se placer contre la paroi d'évacuation (123) dans une direction d'évacuation (A) orientée parallèlement à la direction d'extension longitudinale (E) depuis la ou les sections de transport (21, 22) jusque vers une première zone d'ensachage (11), et pouvant être déplacé depuis la première position jusque dans une deuxième position pour transporter des marchandises (W) vers au moins une autre deuxième zone d'ensachage (10),
**caractérisé en ce que**
l'aiguillage (12) à marchandises présente sur la paroi d'évacuation (123) au moins une discontinuité (122) qui empêche que les marchandises (W) se déplacent contre la paroi d'évacuation (123) en opposition à la direction d'évacuation (A), la ou les discontinuités (122) étant configurées pour ne pas empêcher que les marchandises (W) se déplacent contre la paroi d'évacuation (123) dans la direction d'évacuation (A),
la ou les discontinuités (122) présentent la forme d'une nervure qui s'étend verticalement sur la paroi d'évacuation (123) transversalement par rapport à la direction d'évacuation (A), ou d'un creux formé dans la paroi d'évacuation (123) et par lequel une marchandise vient se placer lors d'un déplacement dans la direction opposée à la direction d'évacuation (A) sur la paroi d'évacuation (123) de telle sorte que la marchandise (W) ne puisse être déplacée plus loin sur la paroi d'évacuation (123) en opposition à la direction d'évacuation (A) ou
plusieurs discontinuités (122) sont formées sur la paroi d'évacuation (123) et présentent la forme de dents de scie présentant un flanc (122A) qui s'étend essentiellement perpendiculairement à la direction d'évacuation (A) et un flanc (122B) qui s'étend obliquement par rapport à la direction d'évacuation.

2. Système (1) de zones d'ensachage pour système de caisses de supermarché selon la revendication 1, **caractérisé en ce que** l'aiguillage (12) à marchandises est relié à une extrémité de manière articulée à une paroi frontière (130-134) qui délimite latéralement la ou les sections de transport (21, 22) de telle sorte que l'aiguillage (12) à marchandises puisse pivoter dans une direction de pivotement (S) en direction de la paroi frontière (130-134).

3. Système (1) de zones d'ensachage pour système de caisses de supermarché selon les revendications 1 ou 2, **caractérisé en ce que** l'aiguillage (12) à marchandises s'étend dans une première position sous un angle oblique (a) par rapport à la direction de transport (F).

4. Système (1) de zones d'ensachage pour système de caisses de supermarché selon l'une des revendications précédentes, **caractérisé en ce que** l'aiguillage (12) à marchandises s'étend parallèlement à la direction de transport (F) dans la deuxième position.

5. Système (1) de zones d'ensachage pour système de caisses de supermarché selon l'une des revendications précédentes, **caractérisé en ce qu'**un dispositif d'entraînement (125) est prévu pour déplacer l'aiguillage (12) à marchandises sous l'action d'un moteur électrique.

6. Système (1) de zones d'ensachage pour système de caisses de supermarché selon la revendication 5, **caractérisé par** un dispositif de commande (126) qui commande le dispositif d'entraînement (125) qui déplace l'aiguillage (12) à marchandises en fonction d'une opération de comptage des marchandises réalisée sur le système (1) de zone d'ensachage.
